# EUROPEAN PATENT APPLICATION

(11) **EP 1 262 986 A2**
(43) Date of publication of application: **04.12.2002**
(21) Application number: 02251613.2
(22) Date of filing: 07.03.2002
(51) Int. Cl.: G11B 33/08

(54) **Vibration damping apparatus**

(30) Priority: 31.05.2001 JP 2001163989
(71) Applicant: Sony Computer Entertainment Inc., Tokyo 107-0052 (JP)
(72) Inventor: Jitsukawa, Keiji, c/o Sony Components Chiba Corp., Katori-gun, Chiba 289-0394 (JP)
(74) Representative: Turner, James Arthur

(57) **Abstract**

A vibration damping apparatus (36) is provided with a main body (37), an elastic deformation section (41) provided at the main body (37), and a projection (42) which is made to follow an action of the elastic deformation section with deformation in every direction. Then, the vibration damping apparatus (36) damps external vibration transferred to the projection in such a way that the elastic deformation section acts as damper. For that reason, in recording/reproducing apparatus and so forth to be electronic apparatus on which the vibration damping apparatus is installed, it is possible to realize reduction of writing time and reading time to recording medium.

## Description

The present invention relates to a vibration damping apparatus.

For instance, in hard disc drive apparatus of conducting recording or reading of information to hard disc to be one of magnetic storage discs, data is written into recording area with compensation due to tracking servo control.

For that reason, if external vibration is added to the hard disc drive apparatus, it takes a long time for compensation by using the tracking servo control caused by the vibration. Accordingly, it is proposed a countermeasure for damping the external vibration by attaching insulator such as rubber to case bottom of the hard disc drive apparatus.

However, the insulator is attached generally on a flat installation surface. Only the insulator on the flat surface has difficulty to damp external vibration sufficiently, thus, in some cases, it is impossible to reduce writing time of data.

Various respective aspects and features of the invention are defined in the appended claims. Features from the dependent claims may be combined with features of the independent claims as appropriate and not merely as explicitly set out in the claims.

The present invention has been proposed to solve or at least alleviate the above-mentioned problem, and embodiments of the present invention can provide vibration damping apparatus capable of damping external vibration.

The vibration damping apparatus of an embodiment of the present invention comprises a main body, an elastic deformation section provided on the main body, and a projection deformable in every direction by means of the action of the elastic deformation section.

In this vibration damping apparatus, since the projection is deformable in every direction following the action of the elastic deformation section against the main body, the elastic deformation section serves role of damper so as to damp external vibration transferred to the projection.

The invention will now be described by way of example with reference to the accompanying drawings, throughout which like parts are referred to by like references, and in which:
FIG. 1 is a perspective view illustrating example in which a hard disc drive apparatus is placed next to an entertainment apparatus on the same desk;
FIG. 2 is a perspective view of an external hard disc drive apparatus;
FIG. 3 is a principal portion enlarged perspective view illustrating condition before installing the vibration damping apparatus on a case of the hard disc drive apparatus;
FIG. 4 is a principal portion enlarged perspective view illustrating condition in which the vibration damping apparatus is installed on the case of the hard disc drive apparatus;
FIG. 5 is a cross section along line I-I of FIG. 4;
FIG. 6 is a back side view of the vibration damping apparatus;
FIG. 7 is a view illustrating direction and position of measuring vibration traveling to the hard disc drive apparatus;
FIG. 8 is a perspective view illustrating an example of placing the hard disc drive apparatus on the entertainment apparatus;
FIG. 9A is a transfer vibration characteristic view illustrating transfer vibration characteristic in A-direction to be backward and forward of the hard disc drive apparatus without providing spherical projection;
FIG. 9B is a transfer vibration characteristic view illustrating transfer vibration characteristic in A-direction to be backward and forward of the hard disc drive apparatus with spherical projection;
FIG. 10A is a transfer vibration characteristic view illustrating transfer vibration characteristic in B-direction to be leftward and rightward of the hard disc drive apparatus without spherical projection;
FIG. 10B is a transfer vibration characteristic view illustrating transfer vibration characteristic in B-direction to be leftward and rightward of the hard disc drive apparatus with spherical projection;
FIG. 11A is a transfer vibration characteristic view illustrating transfer vibration characteristic in perpendicular direction C1 at a corner part of the hard disc drive apparatus without spherical projection;
FIG. 11B is a transfer vibration characteristic view illustrating transfer vibration characteristic in perpendicular direction C1 at a corner part of hard disc drive apparatus with spherical projection;
FIG. 12A is a transfer vibration characteristic view illustrating transfer vibration characteristic in perpendicular direction C2 at a center part of the hard disc drive apparatus without spherical projection;
FIG. 12B is a transfer vibration characteristic view illustrating transfer vibration characteristic in perpendicular direction C2 at a center part of the hard disc drive apparatus with spherical projection; and
FIG. 13 is a principal portion enlarged perspective view illustrating condition in which vibration damping apparatus having obelisk shaped-projection is mounted on the case of the hard disc drive apparatus.

Preferred embodiments of the present invention are described in detail below, with references made to relevant accompanying drawings.

### General outline of present embodiment

Vibration damping apparatus of the present embodiment is one in which there is provided elastic deformation section and projection, and external vibration is damped in such a way that it causes the projection to follow the action of the elastic deformation section with deformation in every direction.

Hereinafter, it will be described in detail referring to accompanying drawings below in an example where vibration damping apparatus according to the present invention is installed on an external hard disc drive apparatus, the hard disc drive apparatus being connected to an entertainment apparatus which configures an entertainment system.

### Outline configuration of entertainment system

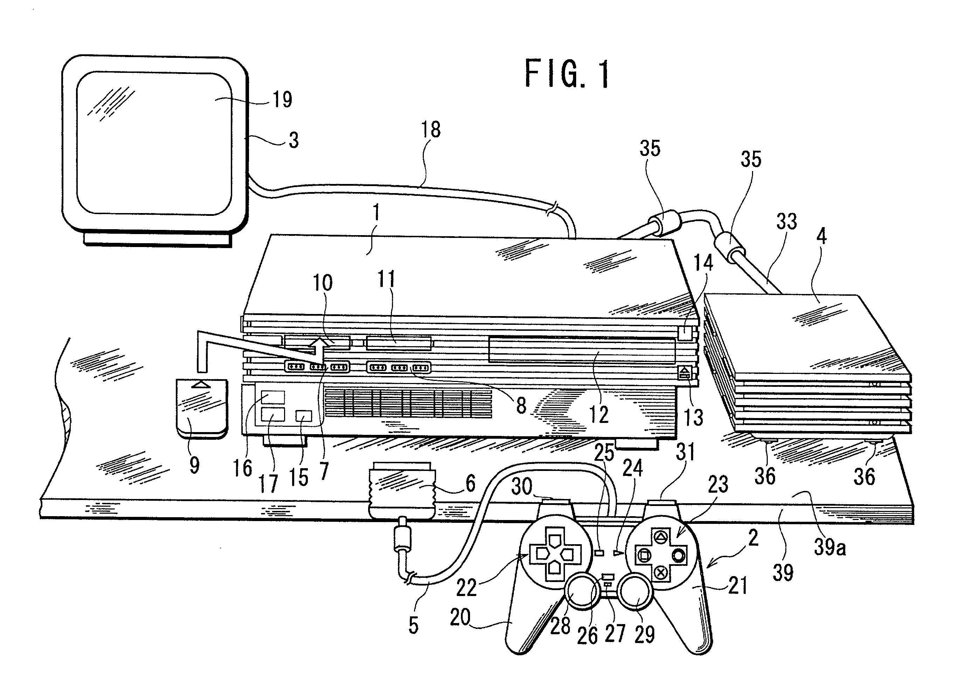

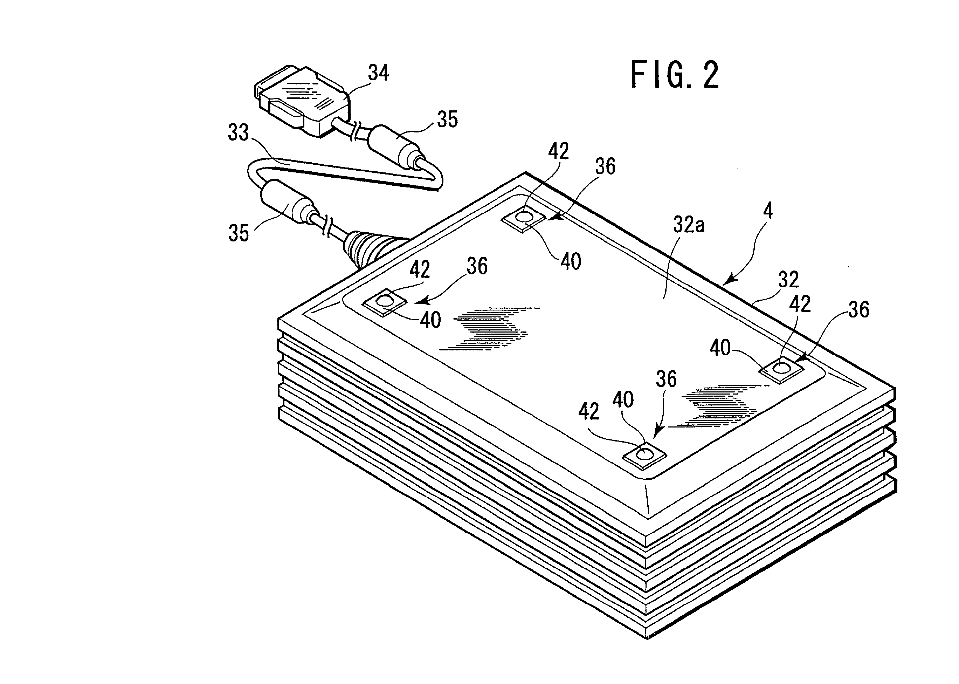

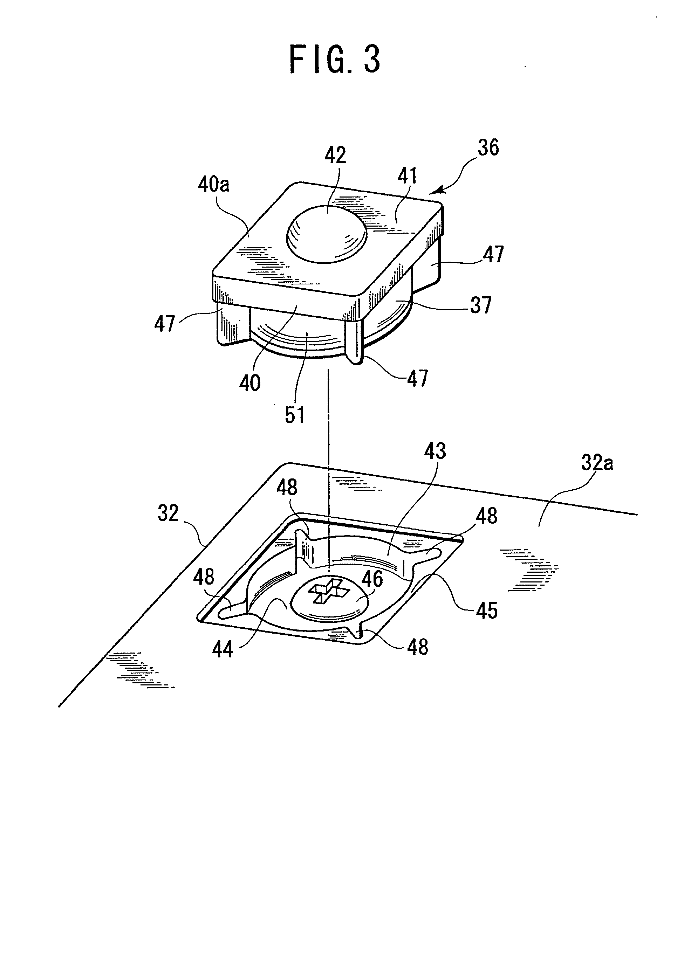

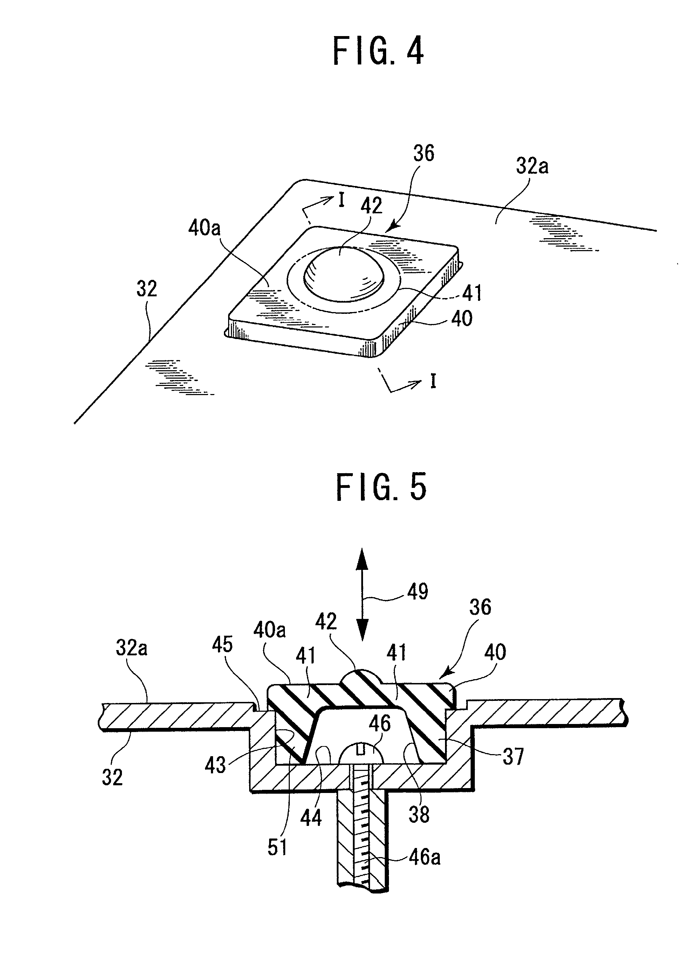

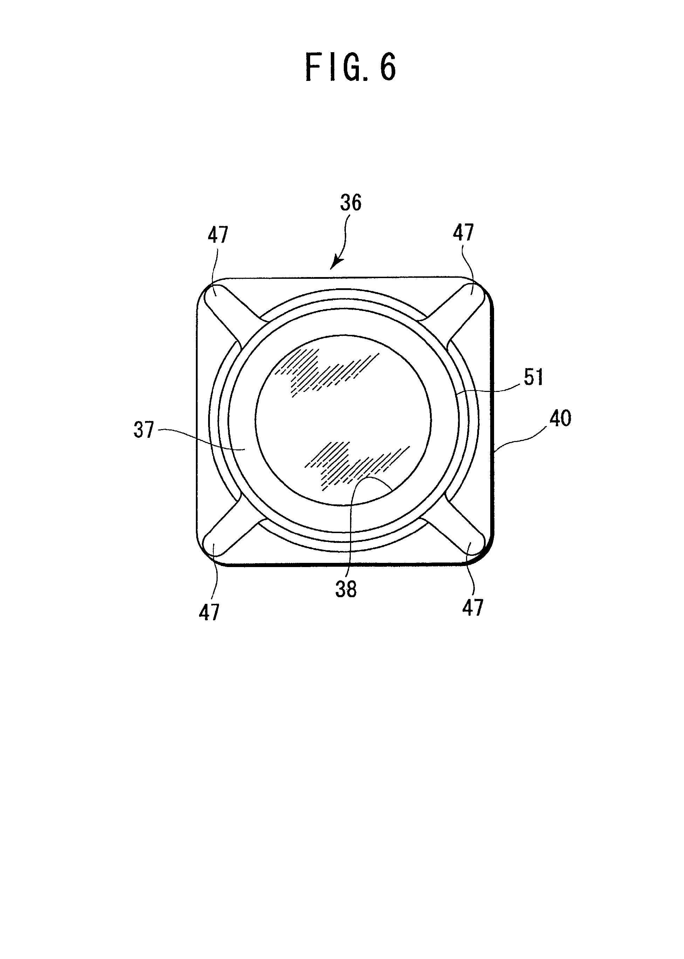

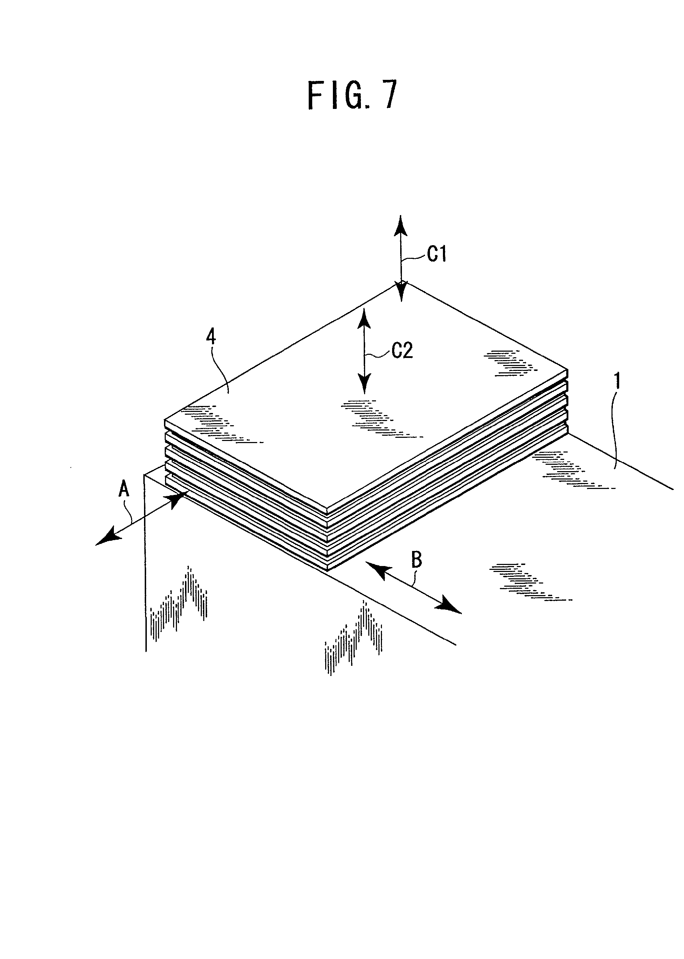

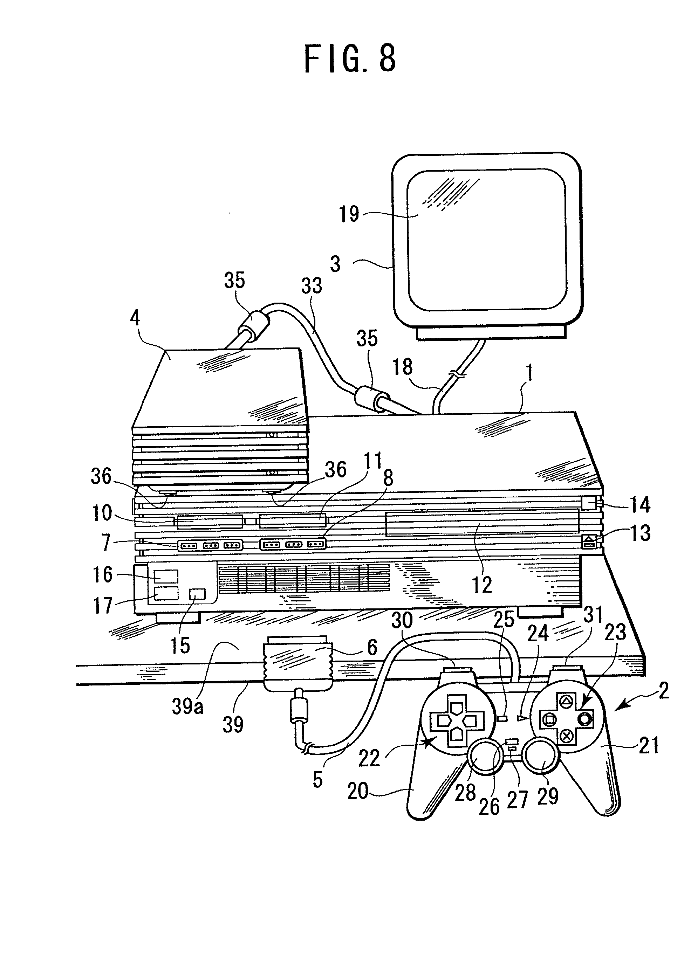

FIG. 1 is a perspective view illustrating example in which hard disc drive apparatus is placed next to entertainment apparatus on the same desk, FIG. 2 is a perspective view of an external hard disc drive apparatus, FIG. 3 is principal portion enlarged perspective view illustrating condition before installing the vibration damping apparatus on a case of the hard disc drive apparatus, FIG. 4 is a principal portion enlarged perspective view illustrating condition in which the vibration damping apparatus is installed on the case of the hard disc drive apparatus, FIG. 5 is a cross section along line I-I of FIG. 4, FIG. 6 is a back side view of the vibration damping apparatus, FIG. 7 is a view illustrating direction and position to measure vibration traveling to the hard disc drive apparatus, and FIG. 8 is a perspective view illustrating an example of placing the hard disc drive apparatus on the entertainment apparatus.

The entertainment system, as illustrated in FIG. 1, is composed of an entertainment apparatus **1** capable of executing various kinds of video games, capable of drawing up and editing of electronic mail, access for Web page, and play back of movie or music, a controller **2** to be an operation terminal connected to the entertainment apparatus **1,** television monitor device **3** for displaying game contents, electronic mail, Web page, movie and so forth and outputting sound, and an external hard disc drive apparatus **4.**

### Entertainment apparatus

The entertainment apparatus **1** is one which executes various kinds of processing for executing a game program, editing the electronic mail, and accessing to the Web page, according to the game program or an application program for the electronic mail, Web browsing and the like all of which are read out from a recording medium such as optical disks for example CD-ROM, DVD-ROM, the hard disk of the hard disk drive apparatus **4** or such as semiconductor memories and so forth, or which are downloaded via various kinds of transfer medium such as telephone lines, LAN, CATV lines, communication satellite lines and so forth, and instructions from operator via the controller **2,** and further executes reproducing (decoding) audio data stored in CD, video such as movie and the audio data stored in DVD.

As illustrated in FIG. 1, at front surface of the entertainment apparatus **1,** there are provided two controller ports **7, 8** to which connector **6** provided at tip of cable **5** connected to the controller **2** is inserted detachably, memory card slots **10, 11** to which memory card **9** is inserted detachably, and disk tray **12** on which optical disk such as DVD-ROM, or CD-ROM or so forth is loaded. Further, at the front surface of the entertainment apparatus **1,** there are provided open/close button **13** for opening or closing the disk tray **12**, on/stand-by/reset button **14** for conducting ON, stand-by of power supply and reset of the game, IEEE (Institute of Electrical and Electronics Engineers) 1394 connecting terminal **15,** two USB (Universal Serial Bus) connecting terminals **16, 17** and so forth.

In addition, at rear surface of the entertainment apparatus **1,** there are provided a power switch, audio and video output terminal (AV multiple output terminal), optical digital output terminal, AC power input terminal, PC card slot and so forth (any of them not illustrated).

### Television monitor apparatus

The television monitor apparatus **3,** as illustrated FIG. 1, is connected to the audio and video output terminal provided at the rear surface of the entertainment apparatus **1** via cable **18.** On a monitor screen **19** of the television monitor apparatus **3,** the above-described game contents, the electronic mail, the Web page, the movie and so forth are displayed. In addition, game sound and the like are output from a speaker of the television monitor apparatus 3.

### Controller

The controller **2,** as illustrated in FIG. 1, has a controller body having a left grip section **20** and a right grip section **21** that are capable of being operated by the operator while being gripped by both hands, and having various kinds of operation buttons on upper surface or front surface of the controller body. Up, down, right and left direction instruction keys **22** are provided on left upper surface of the controller body, and the up, down, right and left direction instruction keys **22** are those of being operated by the operator on the occasion that, for instance, a game character is moved to up, down, right and left directions on the monitor screen **19** in a video game, a character input cursor is moved to up, down, right and left directions on an electronic mail formation screen, page scroll is conducted by using the direction keys **22** during access of Web page, or a cursor on the screen is moved to up, down, right and left directions. These up, down, right and left direction instruction keys **22** are operated by thumb of left hand of the operator when the controller being gripped by both hands.

In addition, at a right upper surface of the controller body, four instruction buttons **23** are provided, and respective different functions according to an application program are allocated to the respective four instruction buttons **23.** Such as, for instance, a function to specify display of menu, a function to specify cancellation and so forth of selected items, a function to specify determination and so forth of selected items, a function to specify display/non-display of table of contents and so forth are allocated to these instruction buttons **23.**

In addition, at upper surface center of the controller body, there are provided a start button **24** for instructing game start or display start of electronic mail screen, and play back start or pause of movie or music, a select button **25** for conducting instruction of displaying menu display or operation panel on the monitor screen **19,** a mode selection switch **26** for conducting selection of operation mode, a light indicator **27** for displaying selection mode, right and left analog operation sections **28, 29** for conducting joy stick operation.

In addition, at front surface of the controller body, right and left depressing buttons **30, 31** are provided, and the right and left depressing buttons **30, 31** are depressed respectively by right or left first finger.

### Hard disk drive apparatus

The hard disk drive apparatus **4** is connected to the PC card slot or accessory kit or so forth provided at the rear surface of the entertainment apparatus **1.** The hard disk drive apparatus **4,** as illustrated in FIG. 2, contains a hard disk drive (not illustrated) within a case **32** which has a housing shaped rectangular body, and has a connection cable **33** connected to the entertainment apparatus 1 from one side surface of the case **32.** At tip of the connection cable **33,** a connector **34** connected to the PC card or accessory kit (not illustrated) is provided. In addition, cores **35** for noise reduction is installed on the connection cable **33.**

The hard disk drive contained within the case **32** serves roles of reading a game program and application program for electronic mails or Web browsing stored in data storage area of the hard disk as needed, or serves a role of writing data within a predetermined track area. Then, the hard disk drive is provided with a tracking servo control mechanism for writing data at desired recording track position. The data is written at the desired track position while being compensated by the tracking serve control mechanism. On the case **32,** there is installed vibration damping apparatus **36** in order to damp external vibration generated from the entertainment apparatus **1.**

### Vibration damping apparatus

The vibration damping apparatus **36,** as illustrated in FIG. 2, is provided in the neighborhood of the four corners of rear surface **32a** of the case **32.** The vibration damping apparatus **36**, as illustrated in FIG. 3 to FIG. 6, is composed of a main body **37**, an elastic deformation section **41** provided on the main body **37,** and a projection **42** projected from its mounted surface **40a** of the main body **37** and deformable by the action of the elastic deformation section **41**. The vibration damping apparatus **36** is made of elastic member formed by integrally molding synthetic resin material composed of rubber and resin.

The vibration damping apparatus **36,** as illustrated in FIG. 3, is installed in such a way as to be fitted into a built-in-concave section **43** provided at the rear surface **32a** of the case **32.** The built-in-concave section **43** is formed as a depression which has a bottom wall **44**. Approximately rectangular shaped step-surface **45** corresponding to narrow end side shape of the main body **37** is formed in the neighborhood of opening of the built-in-concave section **43.** Then, four groove sections **48** formed in vertical direction to the bottom wall **44** are formed at part of the step-surface **45**. Further, at the bottom wall **44,** a head **46** of a fastening screw **46a** for fastening an upper case and a lower case which structure the case **32** is projected at inside of the concave section **43.**

The main body **37,** as illustrated in FIG. 3 and FIG. 6, has a cylindrical section **51** inserted into inside of the built-in-concave section **43,** a concave section **38** formed at undersurface of the cylindrical section **51,** and an approximately rectangular shaped contact portion **40** formed at upper end of the cylindrical section **51**. Four projecting sections **47** are provided at part on outer circumferential surface of the cylindrical section **51** so as to stop slipping-off from the built-in-concave section **43.** These projecting sections **47** are projecting toward the four corners of the rectangular shaped contact portion **40.** Then, the projecting sections **47** come into respective groove sections **48** formed at the built-in-concave section **43.**

The concave section **38,** as illustrated in FIG. 5, is formed at the cylindrical section **51,** in which the concave section **38** is formed as a depression whose circular shaped opening diameter becomes narrow gradually from the neighborhood of the opening toward the contact portions **40.** The contact portions **40** function as leg section placed on surface **39a** of desk **39** and so forth to be surface on which the vibration damping apparatus is placed. Then, a placing-surface **40a** which is the surface of the contact portion **40** is projected from the rear surface **32a** of the case **32.** The projection **42** outwardly projected (toward surface **39a** of the desk **39**) is provided at approximately center part of the contact portion **40**. The projection **42,** as illustrated in FIG. 3 to FIG. 5, is formed so that surface shape is spherical shape. As another viewpoint, the projection **42** is a projection with an approximately hemispherical shape.

The projection **42** is provided through the elastic deformation section **41** to the main body **37.** The elastic deformation section **41,** as illustrated in FIG. 4 and FIG. 5, is provided at circumference of the projection **42** with approximately toric shape (area indicated by two-dotted chain line in FIG. 4). The toric shaped elastic deformation section **41** has thin thickness in comparison with another part of the main body **37,** whereby the toric shaped elastic deformation section functions as a damper. Namely, when external vibration is transmitted to the projection **42,** it causes the projection **42** to follow the action of the elastic deformation section **41** with deformation in the up and down direction (direction indicated by arrowhead 49 in FIG. 5), thereby the external vibration being damped gradually.

### Arrangement of Hard disk drive apparatus and Vibration damping action

General arrangement condition of the hard disk drive apparatus **4,** as illustrated in FIG. 1, is that the hard disk drive apparatus **4** is arranged next to the entertainment apparatus **1.** As irregular case of arrangement condition, the user places the hard disk drive apparatus **4** on the entertainment apparatus **1.** In particular, when the user uses the hard disk drive apparatus **4** in such a way as to place the hard disk drive apparatus **4** on the entertainment apparatus **1** illustrated in FIG. 8, vibration generated at the time when the DVD drive apparatus contained in the entertainment apparatus **1** is driven, travels directly to the hard disk drive apparatus **4.**

In any cases where the hard disk drive apparatus **4** is placed next to the entertainment apparatus **1** or placed on the entertainment apparatus **1,** external vibration generated from the entertainment apparatus **1** travels to the hard disk drive apparatus **4.** The external vibration transmitted to the hard disk drive apparatus **4** travels to the projection **42** of the vibration damping apparatus **36** installed on the rear surface **32a** of the case **32**. Then, the vibration is gradually damped in such a way that it causes the projection **42** to follow the action of the elastic deformation section **41** with deformation in the up and down direction.

In particular, it is enabled to damp vibration even though the vibration acts from not only rightward and leftward direction but also every direction since the shape of the projection **42** is taken to be approximately spherical shape . For that reason, in cases where, in particular, the hard disk drive apparatus **4** is placed directly on the entertainment apparatus **1,** large vibration travels to the hard disk drive apparatus **4,** however, it is possible to damp such vibration within the range that writing or reading of data to the hard disk is not delayed by providing the vibration damping apparatus **36**. Namely, the vibration damping apparatus **36** damps external vibration, so that compensating time of tracking servo control is reduced to allow reduction of writing time of data and reading time of data.

### Vibration damping Experiment example

Here, in cases where the hard disk drive apparatus **4** is placed on the entertainment apparatus **1,** the vibration that travels from the entertainment apparatus **1** to the hard disk drive apparatus **4** is measured. Measurement, as illustrated in FIG. 7, is conducted about A-direction to be forward and backward direction of the hard disk drive apparatus **4** against the entertainment apparatus **1,** about B-direction to be rightward and leftward direction of the hard dist drive apparatus **4** against the entertainment apparatus **1,** and about C-direction to be vertical direction of the hard disk drive apparatus **4** against the entertainment apparatus **1**. It should be noted that in the vertical direction C, vibration of corner part of the hard disk drive apparatus **4** is taken to be C1, and vibration of center part of the hard disk drive apparatus **4** is taken to be C2.

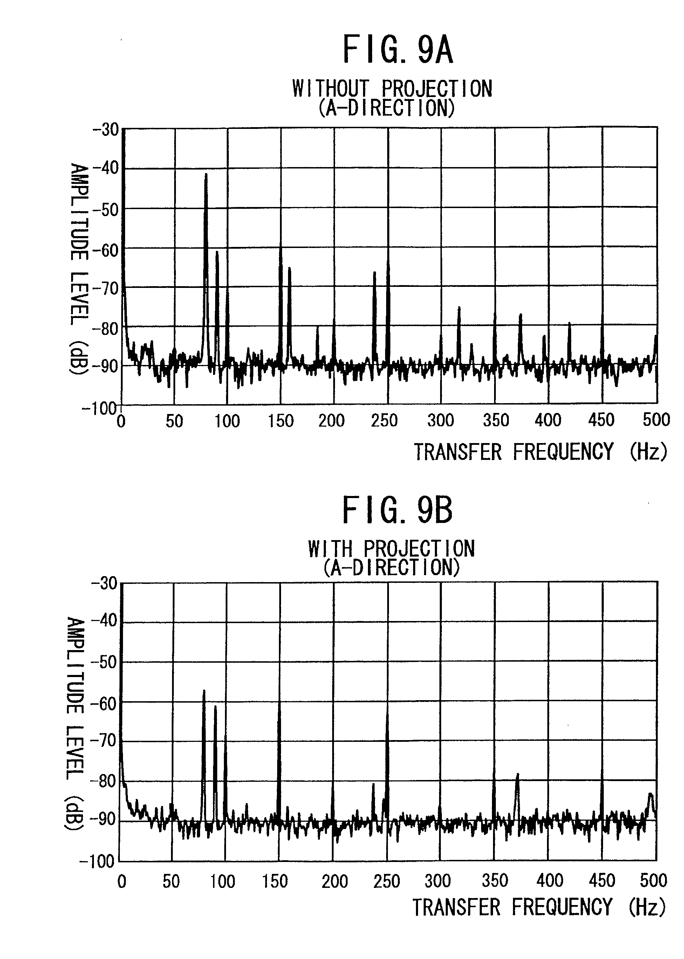

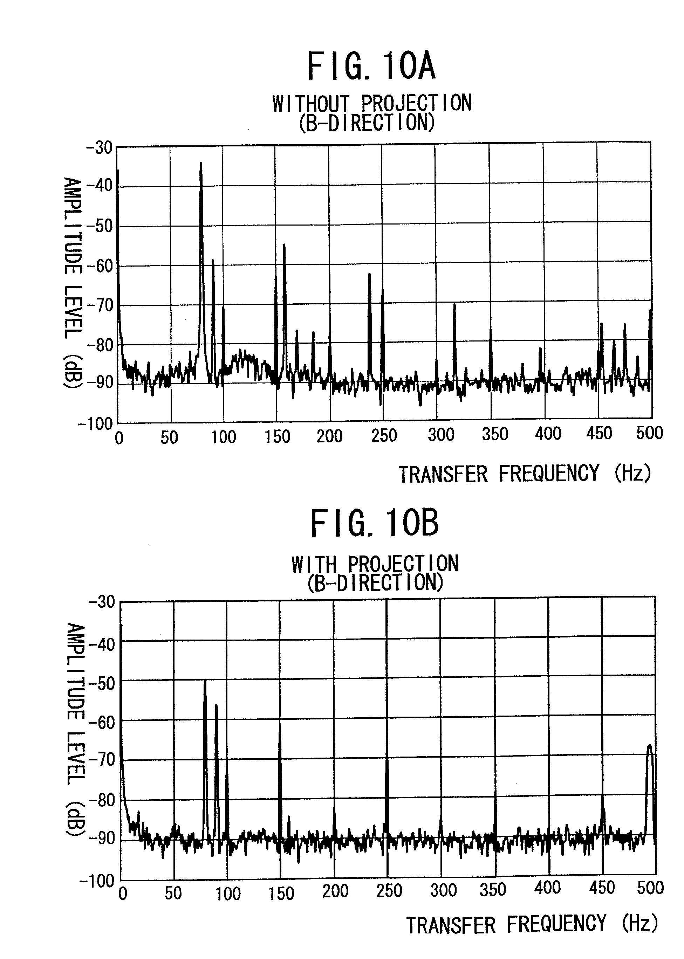

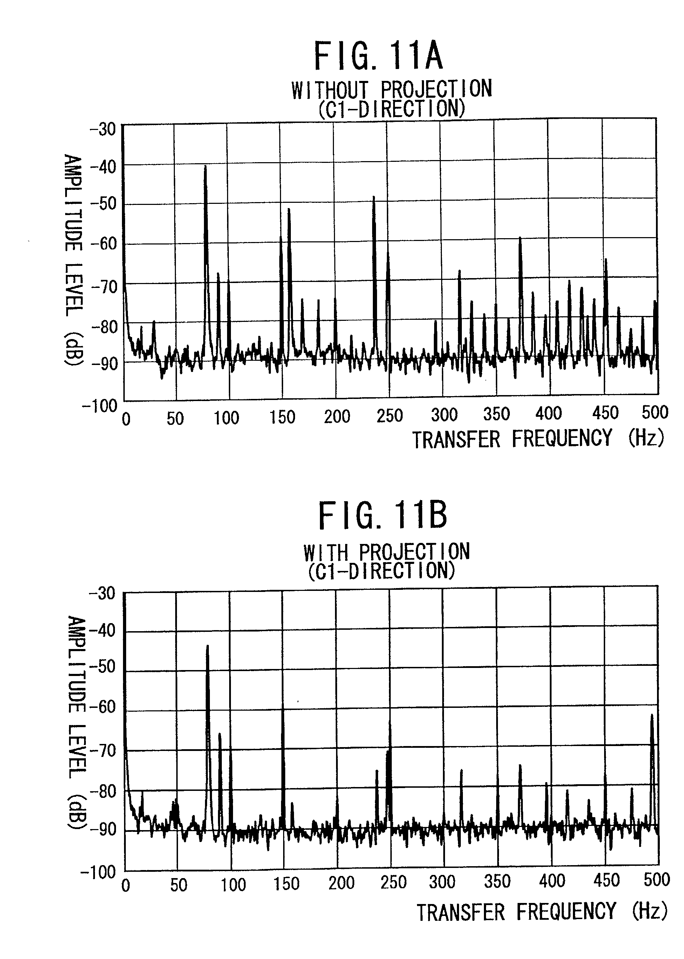

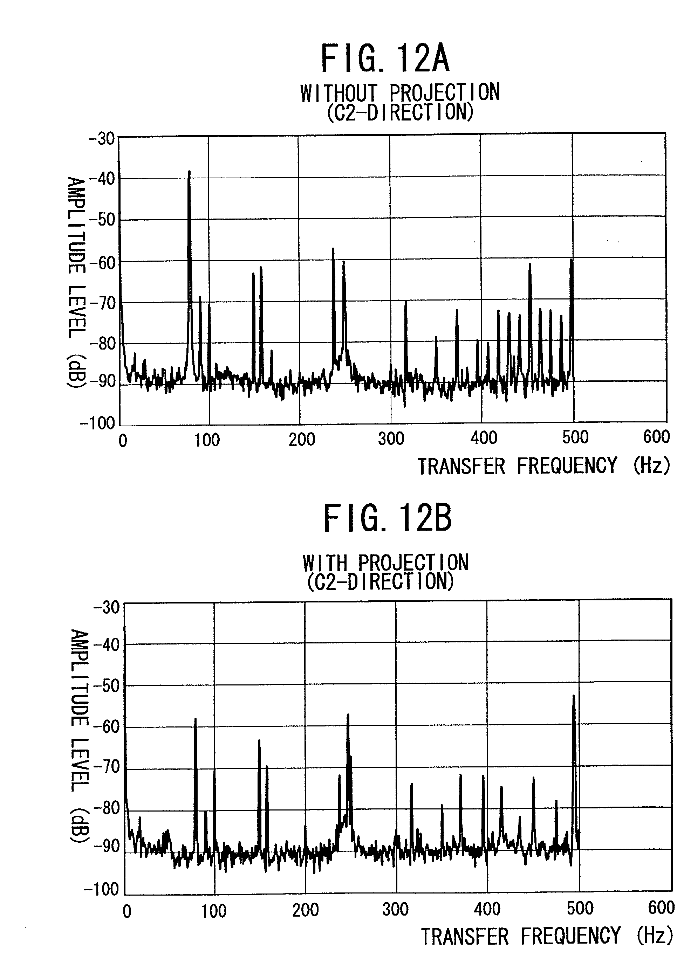

FIG. 9A and FIG. 9B illustrate vibration transfer characteristics in A-direction, FIG. 10A and FIG. 10B illustrate vibration transfer characteristics in B-direction, FIG. 11A and FIG. 11B illustrate vibration transfer characteristics in C1-direction, and FIG. 12A and FIG. 12B illustrate vibration transfer characteristics in C2-direction. In addition, FIG. 9A, FIG. 10A, FIG. 11A, and FIG. 12A illustrate vibration transfer characteristics when the projections **42** in FIG. 3 of the present embodiment are not provided, and FIG. 9B, FIG. 10B, FIG. 11B, and FIG. 12B illustrate vibration transfer characteristics when the projections **42** are provided.

As is known from the vibration transfer characteristics of FIG. 9A, FIG. 9B to FIG. 12A, FIG. 12B, it is clear that the projections **42** damp the vibration in comparison with the case that there are no projections **42**. In particular, the more transfer frequency is raised, namely, the higher the frequency band is such as primary vibration, secondary vibration, third vibration, ···, the less the vibration is further decayed.

### Another embodiment

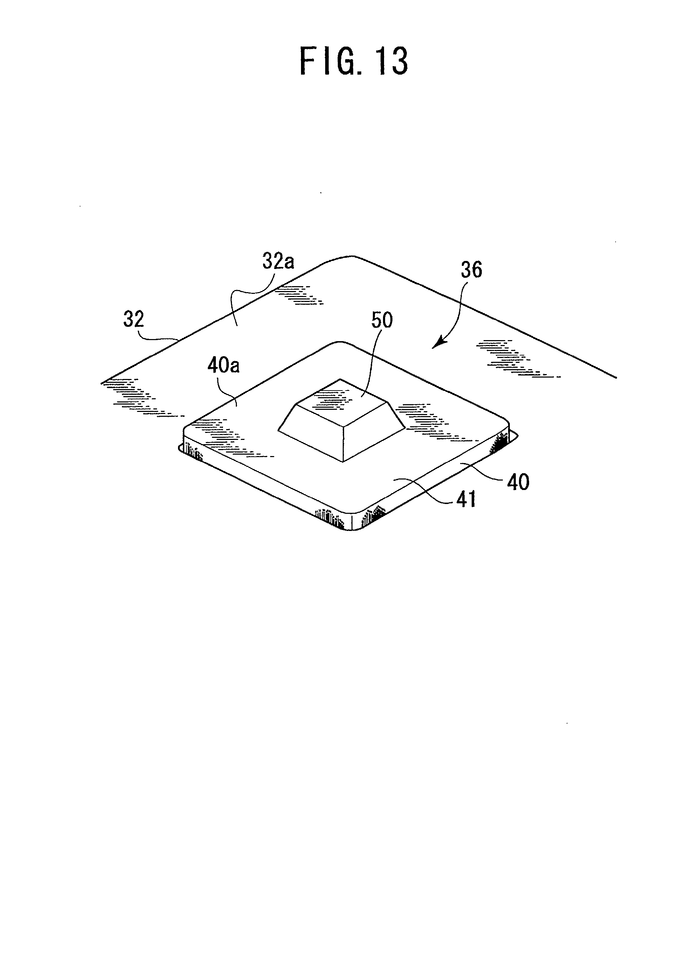

In the above-described embodiment, the shape of projection is taken to be spherical shape, however, for instance, as illustrated in FIG. 13, it is also suitable that the shape of the projection is taken to be projection **50** which has a obelisk body with flat tip. Similar to the projection **42** with spherical shape, it is possible to damp external vibration traveling to the hard disk drive apparatus **4** when the shape of projection is taken to be a obelisk shaped body.

In addition, in the above-described embodiment, the entire vibration damping apparatus is formed by elastic member made of synthetic resin material including rubber and resin, however, part except for the elastic deformation section **41** may be formed by using stiffness member such as hard plastic material without elastic deformation. Namely, when the vibration damping apparatus is formed so that only the elastic deformation section **41** acts elastically with deformation and another part does not act elastically with deformation but becomes fixed condition, the same effect can be obtained.

In addition, in the above-described embodiment, the vibration damping apparatus of the present invention is applied to the hard disk drive apparatus, however, it is suitable that the vibration damping apparatus of the present invention is applied to apparatus that is influenced by the vibration in connection with its recording, playing back, or recording/reproducing. For instance, if the vibration damping apparatus of the present invention is applied to electronic apparatus such as CD-ROM drive apparatus, DVD drive apparatus, video tape recorder apparatus and so forth, it is possible to damp external vibration transferred to these apparatuses.

Lastly, the embodiments described-above are only part of the examples of the present invention. For that reason, the present invention is not limited by the embodiments described above, and also if embodiments except for the aforementioned embodiments fall in the range without departing from the scope and the spirit of technical consciousness according to the present invention, various kinds of modifications and changes are possible depending on design and so forth.

## Claims

1. A vibration damping apparatus, comprising:
a main body installed on a housing;
an elastic deformation section provided on the main body; and
a projection provided on the main body, the projection being deformable in every direction by an action of the elastic deformation.

2. The vibration damping apparatus according to claim 1, wherein the main body has a placing-surface, and the projection is projected from the placing-surface to the side of the surface on which the housing is placed.

3. The vibration damping apparatus according to claim 1 or 2, wherein the main body is made of elastic member.

4. The vibration damping apparatus according to claim 1, 2 or 3, wherein thickness of the elastic deformation section is thin in comparison with the main body.

5. The vibration damping apparatus according to claim 1, 2, 3, 4 or 5, wherein the projection has a spherical shape.

6. The vibration damping apparatus according to claim 1, 2, 3, 4, 5 or 6, wherein the housing is electronic apparatus.

7. The vibration damping apparatus according to claim 1, 2, 3, 4 or 5, wherein the housing is any one of recording apparatus, reproducing apparatus, and recording/reproducing apparatus.

8. The vibration damping apparatus according to claim 1, 2, 3, 4 or 5, wherein the housing is a hard disk drive apparatus.
